# EUROPEAN PATENT APPLICATION

(11) **EP 2 309 229 A1**
(43) Date of publication of application: **13.04.2011**
(21) Application number: 08791787.8
(22) Date of filing: 29.07.2008
(51) Int. Cl.: G01D 5/14, G01B 7/00

(54) **MAGNETIC POSITION SENSOR**

(71) Applicant: Mitsubishi Electric Corporation, Tokyo 100-8310 (JP)
(72) Inventor: KIMURA, Yasuki, Tokyo 100-8310 (JP); NISHIURA, Ryuichi, Tokyo 100-8310 (JP); FURUSAWA, Kimiyasu, Tokyo 100-8310 (JP); YAMASHIRO, Satoshi, Tokyo 100-8310 (JP); TOYA, Mitsutoshi, Tokyo 100-8310 (JP)
(74) Representative: HOFFMANN EITLE
(86) International application number: PCT/JP2008/063552
(87) International publication number: WO 2010/013309

(57) **Abstract**

In a magnetic position sensor, a detecting unit has tubular first and second detecting cores, and a plurality of magnetic detecting elements. The first and second detecting cores are disposed so as to line up axially on opposite sides of a detecting gap. The magnetic detecting elements are disposed in the detecting gap so as to be spaced apart from each other in a circumferential direction of the first and second detecting cores. A magnet unit has a magnet core, and a block-shaped permanent magnet that is coupled to the magnet core. The magnet unit is disposed inside the detecting unit so as to be relatively displaceable axially and rotatable around an axis relative to the detecting unit together with displacement of a measured object.

## Description

### TECHNICAL FIELD

The present invention relates to a magnetic position sensor that detects position of a measured object using a magnetic detecting element.

### BACKGROUND ART

In conventional magnetic position sensors, cylindrical ferromagnetic stators are stacked so as to have a nonmagnetic ring interposes. A magnetic detecting element is disposed in an air gap that is formed by the nonmagnetic ring. The ferromagnetic stators are surrounded by a cylindrical stanchion. A cylindrical permanent magnet that generates two magnetic flux loops that have a branch point at a center thereof is fixed to the stanchion. The stanchion is displaceable axially relative to the ferromagnetic stators, and is also rotatable around an axis (see Patent Literature 1, for example).

[Patent Literature 1]
   Japanese Patent No. 3264929 (Gazette, Figure 3)

### DISCLOSURE OF THE INVENTION

### PROBLEM TO BE SOLVED BY THE INVENTION

In conventional magnetic position sensors such as that described above, since a cylindrical permanent magnet is used in order to make the stanchion rotatable around an axis, the amount of permanent magnet that is used is increased, increasing overall expense.

The present invention aims to solve the above problems and an object of the present invention is to provide a magnetic position sensor that enables magnet volume to be reduced while permitting rotation of a measured object.

### MEANS FOR SOLVING THE PROBLEM

In order to achieve the above object, according to one aspect of the present invention, there is provided a magnetic position sensor including: a tubular detecting unit including: tubular first and second detecting cores that are disposed so as to line up axially on opposite sides of a detecting gap; and a plurality of magnetic detecting elements that are disposed in the detecting gap so as to be spaced apart from each other in a circumferential direction of the first and second detecting cores, and that detect magnetic flux that passes through the detecting gap; and a magnet unit including: a magnet core; and a block-shaped permanent magnet that is coupled to the magnet core, the magnet unit being disposed inside the detecting unit so as to be relatively displaceable axially and rotatable around an axis relative to the detecting unit together with displacement of a measured object, and generating a plurality of magnetic flux loops that have different orientations between the first and second detecting cores.

### BRIEF DESCRIPTION OF THE DRAWINGS

Figure 1 is a cross section that is taken along a shaft axis of a magnetic position sensor according to Embodiment 1 of the present invention;
Figure 2 is a cross section that is taken along line II - II in Figure 1;
Figure 3 is a cross section that shows a state in which a movable shaft and a magnet unit from Figure 1 have been displaced axially;
Figure 4 is a cross section that shows a state in which a magnet unit from Figure 2 has been rotated 45 degrees around an axis;
Figure 5 is a cross section that is taken along a shaft axis of a magnetic position sensor according to Embodiment 2 of the present invention;
Figure 6 is a cross section that is taken along line VI - VI in Figure 5;
Figure 7 is a cross section that shows a state in which a magnet unit from Figure 6 has been rotated 45 degrees around an axis; and
Figure 8 is a cross section that shows a variation of a shape of a permanent magnet.

### BEST MODE FOR CARRYING OUT THE INVENTION

Preferred embodiments of the present invention will now be explained with reference to the drawings.

### Embodiment 1

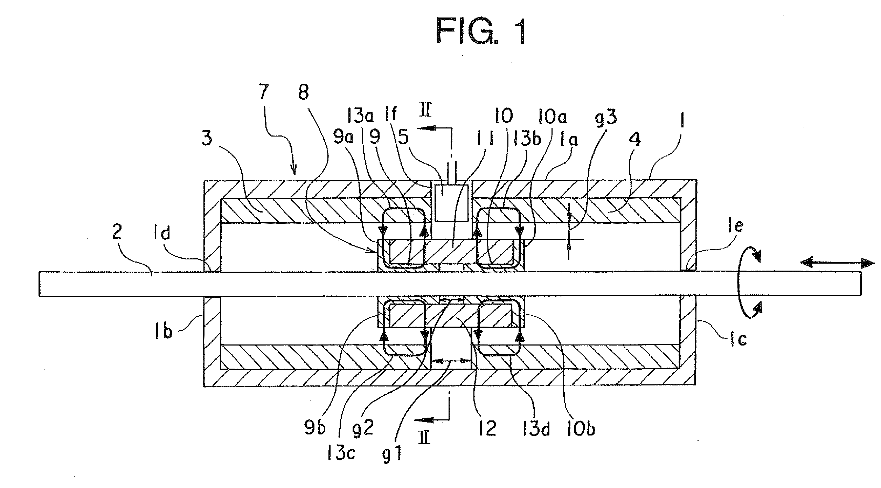

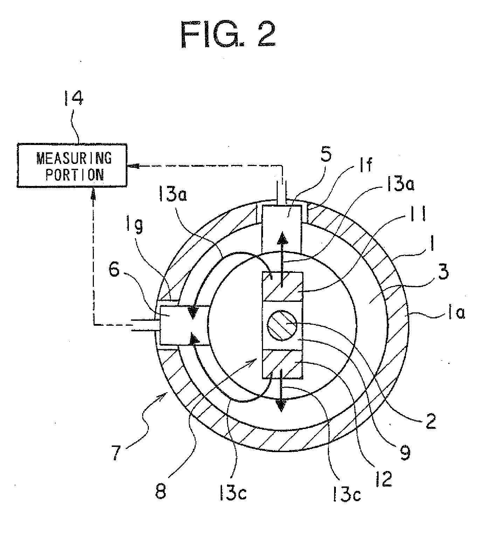

Figure 1 is a cross section that is taken along a shaft axis of a magnetic position sensor according to Embodiment 1 of the present invention, and Figure 2 is a cross section that is taken along line II - II in Figure 1. In the figures, a case 1 has: a cylindrical portion 1a; and first and second disk portions 1b and 1c that are disposed on two axial end portions of the cylindrical portion 1a. Shaft supporting apertures 1d and 1e are disposed centrally on the disk portions 1b and 1c, respectively.

A movable shaft 2 that has a circular cross section that can be displaced together with displacement of a measured object (not shown) is passed through the shaft supporting apertures 1d and 1e. The movable shaft 2 is supported by the disk portions 1b and 1c so as to be slidable in an axial direction and rotatable around an axis.

Cylindrical first and second detecting cores (stator cores) 3 and 4 that are made of ferromagnetic bodies of iron, etc., are fixed to inner peripheral surfaces of the cylindrical portion 1a. The first and second detecting cores 3 and 4 are disposed so as to line up axially on opposite sides of a ring-shaped detecting gap g1. External dimensions of the first and second detecting cores 3 and 4 are similar to each other.

First and second magnetic detecting elements 5 and 6 that detect magnetic flux that passes through the detecting gap g1 are disposed in the detecting gap g1. The first and second magnetic detecting elements 5 and 6 are disposed concyclically so as to be spaced apart from each other in a circumferential direction of the first and second detecting cores 3 and 4. In this example, the first magnetic detecting element 5 is disposed in an upper end portion of the detecting gap g1, and the second magnetic detecting element 6 is disposed at a position that is offset by 90 degrees from the first magnetic detecting element 5. First and second element insertion apertures 1f and 1g into which the first and second magnetic detecting elements 5 and 6 are inserted are disposed on the cylindrical portion 1a.

Magnetically sensitive portions that are constituted by Hall elements, for example, are disposed on the magnetic detecting element 5 and 6. The magnetic detecting element 5 and 6 generate signals that correspond to the magnetic flux to the left and right in Figure 1, i.e., in a direction that is parallel to the direction of sliding of the movable shaft 2.

A detecting unit 7 according to Embodiment 1 includes the case 1, the first and second detecting cores 3 and 4, and the first and second magnetic detecting elements 5 and 6.

A magnet unit 8 is mounted to the movable shaft 2. The magnet unit 8 is fixed to the movable shaft 2 inside the detecting unit 7. The magnet unit 8 has: first and second magnet cores 9 and 10 that are made of a ferromagnetic body of iron, etc., and that are fixed to the movable shaft 2; and rectangular parallelepiped (block-shaped) first and second permanent magnets 11 and 12 that are coupled to the first and second magnet cores 9 and 10.

The first and second magnet cores 9 and 10 are disposed on opposite sides of a divided gap g2 so as to line up axially. A pair of facing portions 9a and 9b that extend radially outward from the movable shaft 2 and that face an inner peripheral surface of the first detecting core 3 are disposed on an axial end portion of the first magnet core 9 at an opposite end from the second magnet core 10. A pair of facing portions 10a and 10b that extend radially outward from the movable shaft 2 and that face an inner peripheral surface of the second detecting core 4 are disposed on an axial end portion of the second magnet core 10 at an opposite end from the first magnet core 9.

First axial end portions of the first and second permanent magnets 11 and 12 are fixed to the first magnet core 9. Second axial end portions of the first and second permanent magnets 12 are fixed to the second magnet core 10. In addition, the first and second permanent magnets 11 and 12 are disposed so as to be offset by 180 degrees from each other around the axis of the movable shaft 2. In other words, the second permanent magnet 12 is disposed in a reverse direction to the first permanent magnet 11 on a reverse side of the first permanent magnet 11.

The first permanent magnet 11 is disposed between the facing portions 9a and 10a. The second permanent magnet 12 is also disposed between the facing portions 9b and 10b. Furthermore, the first and second permanent magnets 11 and 12 are magnetized as dipoles in thickness directions thereof. Thus, the magnet unit 8 generates a plurality of magnetic flux loops 13a through 13d that have different orientations between the first and second detecting cores 3 and 4. The orientation of the magnetic flux loops 13a and 13c and the orientation of the magnetic flux loops 13b and 13d are in reverse directions across the divided gap g2.

The magnet unit 8 is displaceable and rotatable integrally with the movable shaft 2 together with the displacement of the measured object. Specifically, the magnet unit 8 is displaceable parallel to an axial direction of the first and second detecting cores 3 and 4 and is also rotatable around an axis. A main gap g3 is disposed between an inner peripheral surface of the detecting unit 7 and an outer peripheral surface of the magnet unit 8.

The signals from the first and second magnetic detecting elements 5 and 6 are input into a measuring portion 14. The measuring portion 14 adds the signals from the first and second magnetic detecting elements 5 and 6, and measures the position of the measured object based on the result of that addition.

Next, a method for detecting the position of the measured object will be explained. When the magnet unit 8 is positioned at a neutral position that is shown in Figure 1 relative to the detecting unit 7, the magnetic flux density that is detected by the magnetic detecting elements 5 and 6 is in a state close to zero since the axial position of the divided gap g2 is aligned with the magnetic detecting elements 5 and 6, and the magnetic flux loops 13a and 13c and the magnetic flux loops 13b and 13d act to cancel out on two sides of the magnetic detecting elements 5 and 6.

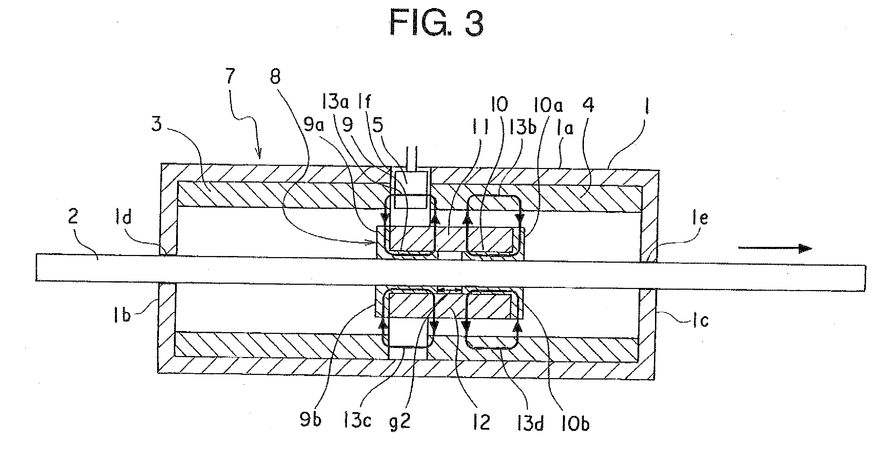

Figure 3 is a cross section that shows a state in which the movable shaft 2 and the magnet unit 8 from Figure 1 have been displaced axially. If the magnet unit 8 is displaced to the right in Figure 1, as shown in Figure 3, output from the magnetic detecting element 5 changes in response to the amount of movement of the magnet unit 8 since a greater amount of magnetic flux from the magnetic flux loop 13a enters the magnetic detecting element 5. Similarly, if the magnet unit 8 is displaced to the left in Figure 1, as shown in Figure 3, output from the magnetic detecting element 5 changes in reverse since a greater amount of magnetic flux from the magnetic flux loop 13b enters the magnetic detecting element 5.

if the first permanent magnet 11 faces the first magnetic detecting element 5 when the magnet unit 8 is displaced in an axial direction, as shown in Figure 2, a large portion of the magnetic flux loop 13a (or 13b) from the first permanent magnet 11 flows to the first magnetic detecting element 5. In addition, a portion of the magnetic flux loop 13a (or 13b) also flows to the second magnetic detecting element 6 through the first detecting core 3 (or the second detecting core 4). In addition, the magnetic flux loop 13c (or 13d) from the second permanent magnet 12 flows to the second magnetic detecting element 6.

Here, when a voltage V1 that the first magnetic detecting element 5 outputs and a voltage V2 that the second magnetic detecting element 6 outputs are compared, the voltage V1 from the first magnetic detecting element 5, to which a distance from the permanent magnets 11 and 12 is closest, is greater than V2.

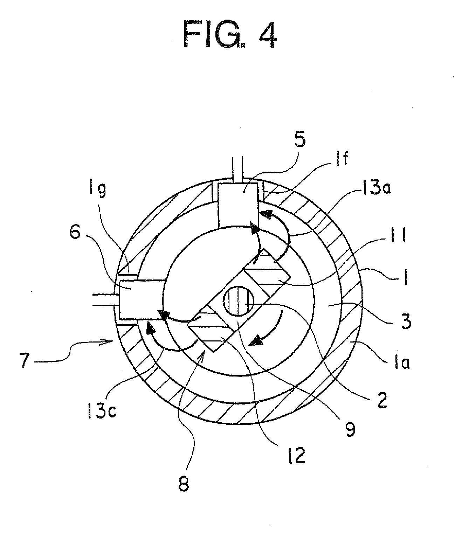

Figure 4 is a cross section that shows a state in which the magnet unit 8 from Figure 2 has been rotated 45 degrees around an axis. If the magnet unit 8 is rotated as shown in Figure 4 when the magnet unit 8 is displaced axially, a distance between the first permanent magnet 11 and the first magnetic detecting element 5 and a distance between the second permanent magnet 12 and the second magnetic detecting element 6 become equal, making the voltage V1 and the voltage V2 equal. If the rotation angle is other than 45 degrees, the flow in the magnetic flux loops 13a through 13d is in an intermediate state between those of Figure 2 and Figure 4.

Consequently, the value when the voltage V1 from the first magnetic detecting element 5 and the voltage V2 from the second magnetic detecting element 6 are added is an equal value irrespective of the rotation angle of the movable shaft 2 and the magnet unit 8 around an axis, and varies only depending on the amount of axial displacement of the movable shaft 2 and the magnet unit 8. Because of this, the measuring portion 14 adds the voltage signal from the first and second magnetic detecting elements 5 and 6, and can measure the position of the measured object based on the result of that addition.

In a magnetic position sensor of this kind, because the first and second magnetic detecting elements 5 and 6 are disposed in the detecting gap g1 so as to be spaced apart from each other circumferentially, the position of the measured object can be measured using rectangular parallelepiped permanent magnets 11 and 12, enabling magnet volume to be reduced compared to when a cylindrical permanent magnet is used. In other words, magnet volume can be reduced while permitting rotation of a measured object.

Moreover, in Embodiment 1, the position of a measured object is measured based on results of adding signals from the first and second magnetic detecting elements 5 and 6, but an average value of the signals from the first and second magnetic detecting elements 5 and 6 can also be found, and the position of the measured object measured based on that average value.

### Embodiment 2

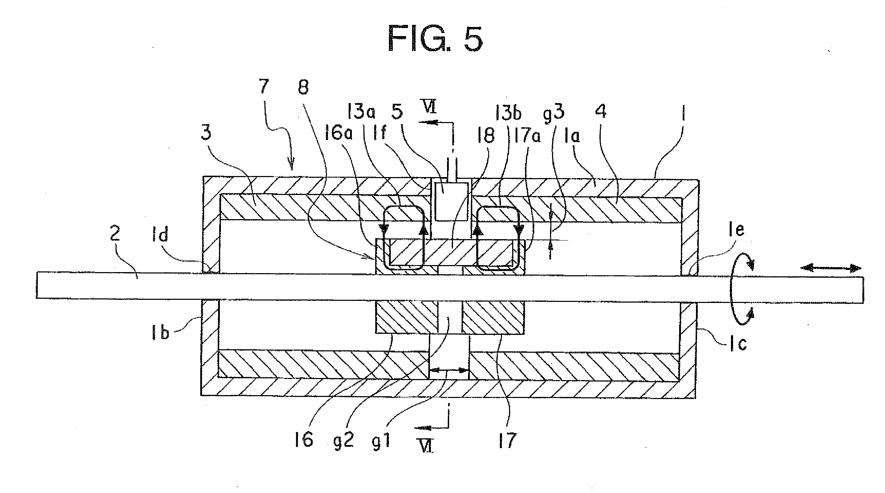

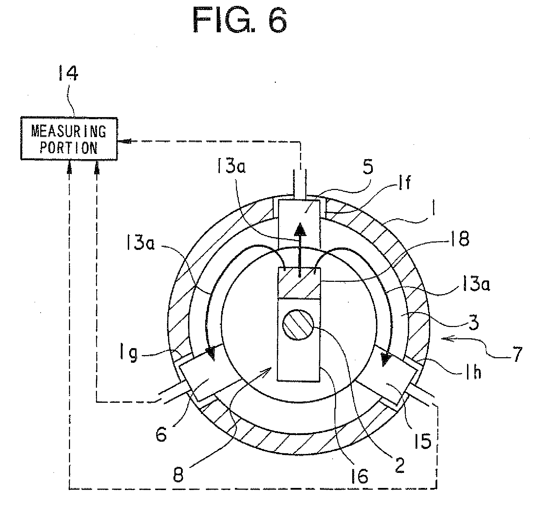

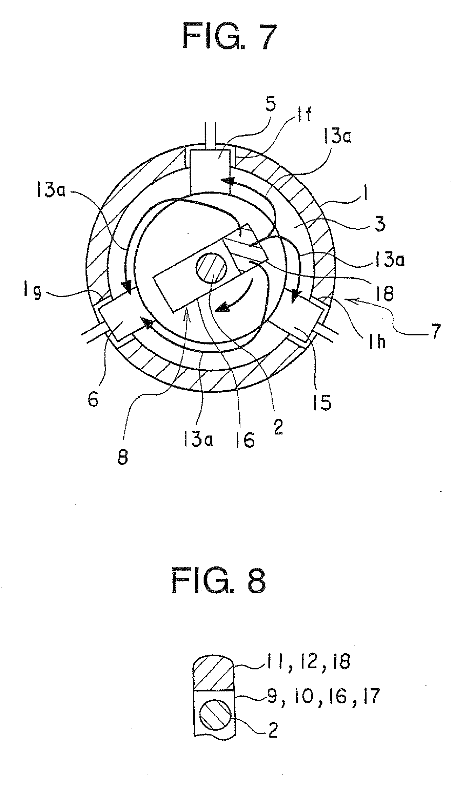

Figure 5 is a cross section that is taken along a shaft axis of a magnetic position sensor according to Embodiment 2 of the present invention, Figure 6 is a cross section that is taken along line VI - VI in Figure 5, and Figure 7 is a cross section that shows a state in which a magnet unit from Figure 6 has been rotated 45 degrees around an axis.

In the figures, first through third magnetic detecting elements 5, 6, and 15 are disposed in a detecting gap g1. The first through third magnetic detecting elements 5, 6, and 15 are disposed concyclically so as to be spaced apart from each other in a circumferential direction of first and second detecting cores 3 and 4. In other words, the first through third magnetic detecting elements 5, 6, and 15 are disposed so as to be offset by 120 degrees from each other in a circumferential direction of the first and second detecting cores 3 and 4. First through third element insertion apertures 1f, 1g, and 1h into which the first through third magnetic detecting elements 5, 6, and 15 are inserted are disposed on a cylindrical portion 1a.

A detecting unit 7 according to Embodiment 2 includes a case 1, the first and second detecting cores 3 and 4, and the first through third magnetic detecting elements 5, 6, and 15.

A magnet unit 8 according to Embodiment 2 has: first and second magnet cores 16 and 17; and a single rectangular parallelepiped (block-shaped) permanent magnet 18 that is coupled to the first and second magnet cores 16 and 17.

A facing portion 16a that extends radially outward from the movable shaft 2 and that faces an inner peripheral surface of the first detecting core 3 is disposed on an axial end portion of the first magnet core 16 at an opposite end from the second magnet core 17. A facing portion 17a that extends radially outward from the movable shaft 2 and that faces an inner peripheral surface of the second detecting core 4 is disposed on an axial end portion of the second magnet core 17 at an opposite end from the first magnet core 16.

A first axial end portion of the permanent magnet 18 is fixed to the first magnet core 16. A second axial end portion of the permanent magnet 18 is fixed to the second magnet core 17. In addition, the permanent magnet 18 is disposed between the facing portions 16a and 17a. Furthermore, the permanent magnet 18 is magnetized as a dipole in a thickness direction thereof. Thus, the magnet unit 8 generates magnetic flux loops 13a and 13b that have different orientations between the first and second detecting cores 3 and 4.

The signals from the first through third magnetic detecting elements 5, 6, and 15 are input into a measuring portion 14. The measuring portion 14 adds the signals from the first through third magnetic detecting elements 5, 6, and 15, and measures the position of the measured object based on the result of that addition. The rest of the configuration is similar to that of Embodiment 1.

If the permanent magnet 18 faces the first magnetic detecting element 5 as shown in Figure 6 when the magnet unit 8 is displaced axially, an output voltage V1 from the first magnetic detecting element 5, to which a distance from the permanent magnet 18 is closest, is greater than output voltages V2 and V3 from the second and third magnetic detecting elements 6 and 15.

If the magnet unit 8 is rotated by 45 degrees, for example, from this state around the axis as shown in Figure 7, the output voltages V1 and V3 from the first and third magnetic detecting elements 5 and 15 become equal to each other, and the output voltage V2 from the second magnetic detecting element 6 becomes less than V1 and V3. If the rotation angle is other than 45 degrees, the flow in the magnetic flux loops 13a and 13b is in an intermediate state between those of Figure 6 and Figure 7.

Consequently, the value when the voltages V1 through V3 from the first through third magnetic detecting elements 5, 6, and 15 are added is an equal value irrespective of the rotation angle of the movable shaft 2 and the magnet unit 8 around an axis, and varies only depending on the amount of axial displacement of the movable shaft 2 and the magnet unit 8. Because of this, the measuring portion 14 adds the voltage signal from the first through third magnetic detecting elements 5, 6, and 15, and can measure the position of the measured object based on the result of that addition.

In a magnetic position sensor of this kind, because the first through third magnetic detecting elements 5, 6, and 15 are disposed in the detecting gap g1 so as to be spaced apart from each other circumferentially, the position of the measured object can be measured using a rectangular parallelepiped permanent magnet 18, enabling magnet volume to be reduced compared to when a cylindrical permanent magnet is used. In other words, magnet volume can be reduced while permitting rotation of a measured object.

By using three magnetic detecting elements 5, 6, and 15, a single permanent magnet 18 can be used, enabling magnet volume to be reduced further.

Moreover, in Embodiment 2, the position of a measured object is measured based on results of adding signals from the first through third magnetic detecting elements 5, 6, and 15, but an average value of the signals from the first through third magnetic detecting elements 5, 6, and 15 can also be found, and the position of the measured object measured based on that average value.

In Embodiments 1 and 2, surfaces of the permanent magnets 11, 12, and 18 that face the inner peripheral surface of the detecting unit 7 are flat surfaces, but are not limited to this, and may also be curved surfaces that have circular arc-shaped cross sections that are parallel to the inner peripheral surface of the detecting unit 7, for example, as shown in Figure 8.

In addition, in Embodiments 1 and 2, a cylindrical detecting unit 7 is shown, but is not limited to this, and may also be a tubular shape that has a polygonal cross section, for example.
In Embodiments 1 and 2, the detecting unit 7 is fixed, and the magnet unit 8 has been made displaceable with a measured object, but that may also be reversed.
It is not absolutely necessary for the first and second magnet cores 9 and 10 or 16 and 17 to be divided.

## Claims

1. A magnetic position sensor comprising:
a tubular detecting unit comprising:
tubular first and second detecting cores that are disposed so as to line up axially on opposite sides of a detecting gap; and
a plurality of magnetic detecting elements that are disposed in the detecting gap so as to be spaced apart from each other in a circumferential direction of the first and second detecting cores, and that detect magnetic flux that passes through the detecting gap; and
a magnet unit comprising:
a magnet core; and
a block-shaped permanent magnet that is coupled to the magnet core,
the magnet unit being disposed inside the detecting unit so as to be relatively displaceable axially and rotatable around an axis relative to the detecting unit together with displacement of a measured object, and generating a plurality of magnetic flux loops that have different orientations between the first and second detecting cores.

2. A magnetic position sensor according to Claim 1, wherein:
the magnetic detecting elements include:
a first magnetic detecting element; and
a second magnetic detecting element that is disposed so as to be offset by 90 degrees around an axis relative to the first magnetic detecting element; and
the permanent magnet includes:
a first permanent magnet; and
a second permanent magnet that is disposed on reverse side from the first permanent magnet.

3. A magnetic position sensor according to Claim 1, wherein the magnetic detecting elements include first through third magnetic detecting elements that are disposed so as to each be offset by 120 degrees around an axis.

4. A magnetic position sensor according to any one of Claims 1 through 3, further comprising a measuring portion that adds signals from the magnetic detecting elements, and that measures a position of the measured object based on a result of the addition.

5. A magnetic position sensor according to any one of Claims 1 through 3, further comprising a measuring portion that finds an average value of signals from the magnetic detecting elements, and that measures a position of the measured object based on the average value.
